# EUROPEAN PATENT APPLICATION

(11) **EP 4 410 535 A1**
(43) Date of publication of application: **07.08.2024**
(21) Application number: 22895577.9
(22) Date of filing: 14.11.2022
(51) Int. Cl.: B32B 5/28, B32B 3/02

(54) **COMPOSITE MATERIAL STRUCTURE AND METHOD FOR PRODUCING COMPOSITE MATERIAL STRUCTURE**

(30) Priority: 16.11.2021 JP 2021186444
(71) Applicant: Mitsubishi Heavy Industries, Ltd., Tokyo 100-8332 (JP); Tsuchiya Co., Ltd., Nagoya-shi, Aichi 460-8330 (JP); Almedio Inc., Kunitachi-shi, Tokyo 186-0002 (JP)
(72) Inventor: YOSHINO, Shunsuke, Tokyo 100-8332 (JP); TOMIYAMA, Masao, Kunitachi-shi, Tokyo 186-0002 (JP); KATO, Noriyuki, Kunitachi-shi, Tokyo 186-0002 (JP); YOSHIDA, Osamu, Nagoya-shi, Aichi 460-8330 (JP); TSUJI, Kotaro, Nagoya-shi, Aichi 460-8330 (JP); ITO, Chiaki, Nagoya-shi, Aichi 460-8330 (JP)
(74) Representative: Hoffmann Eitle
(86) International application number: PCT/JP2022/042267
(87) International publication number: WO 2023/090296

(57) **Abstract**

A composite material structure includes a composite material including a carbon fiber and a resin; a conductive primer including a carbon nanofiber and applied at least on a surface of the edge of the composite material; and a conductive sealant including a conductive material and applied on the surface of the conductive primer.

## Description

### Field

The present disclosure relates to a composite material structure and a composite material structure manufacturing method.

### Background

For components made of composite materials such as carbon-fiber-reinforced plastics (CFRPs), technologies for preventing edge glow are known. Edge glow is a spark generated from a cutout surface of an end (edge) of such a component, when lightning strikes. For example, Patent Literature 1 discloses a technology for applying a conductive coating material, in replacement of an insulating sealant, to prevent generation of edge glow.

### Citation List

### Patent Literature

Japanese Patent No. 6722985

### Summary

### Technical Problem

According to Patent Literature 1, edge glow is prevented by applying a thin layer of a conductive coating agent including a conductive material, such as carbon nanotubes or metal nanowires, on the surface of a CFRP composite structure. However, when metal nanowires are used as the conductive material, the potential difference between the metal nanowires and the carbon fibers in the CFRP may cause erosion such as electrical erosion. Furthermore, because carbon nanotubes are not very dispersible, when the carbon nanotubes are used as the conductive material, workability in agent application may deteriorate, or resultant conductivity may lack uniformity.

To address such issues, an object of the present disclosure is to provide a composite material structure and a composite material structure manufacturing method capable of preventing generation of edge glow.

### Solution to Problem

A composite material according to the present disclosure includes: a composite material including a carbon fiber and a resin; a conductive primer including a carbon nanofiber and applied at least on a surface of an edge of the composite material; and a conductive sealant including a conductive material and applied on the surface of the conductive primer.

A composite material manufacturing method according to the present disclosure includes the steps of: blasting at least a surface of an edge of a composite material including a carbon fiber and a resin; applying a conductive primer including a carbon nanofiber to a blasted area of the composite material; and applying a conductive sealant including a conductive material on a surface of the conductive primer.

### Advantageous Effects of Invention

According to the present disclosure, it is possible to prevent generation of edge glow, appropriately. Brief Description of Drawings
FIG. 1 is a diagram schematically illustrating an exemplary cross section of a composite material structure according to an embodiment.
FIG. 2 is a diagram schematically illustrating an exemplary cross section of a composite material structure according to a modification of the embodiment.
FIG. 3 is a flowchart illustrating one example of the sequence of a composite material structure manufacturing method according to the embodiment.

### Description of Embodiments

An embodiment according to the present invention will now be explained in detail with reference to some drawings. This embodiment is, however, not intended to limit the scope of the present invention in any way. Furthermore, elements in the embodiment described below include those that are replaceable, that a person skilled in the art can easily come up with, or those that are substantially identical. Furthermore, the elements described below may be combined as appropriate, and when there are a plurality of embodiments, such embodiments may also be combined.

### [Embodiment]

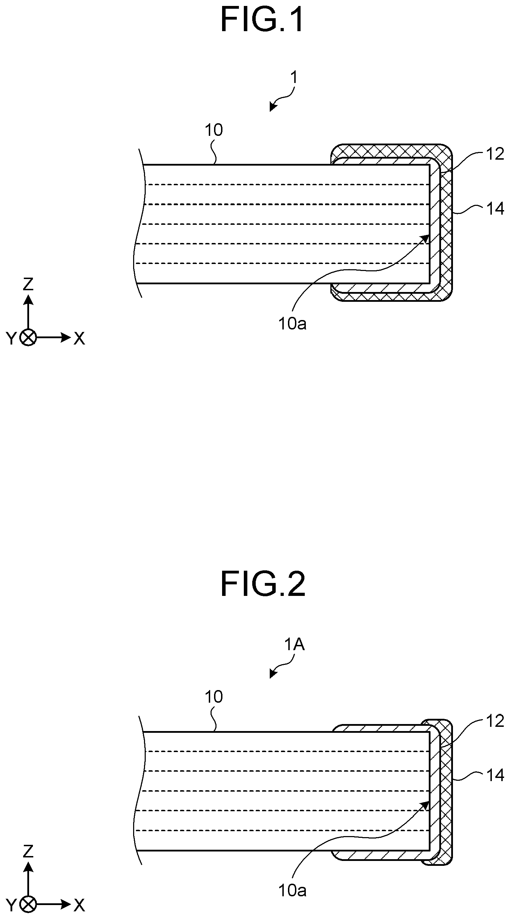

One example of the composite material structure according to an embodiment will now be explained with reference to FIG. 1. FIG. 1 is a diagram schematically illustrating an exemplary cross section of a composite material structure according to the embodiment.

As illustrated in FIG. 1, this composite material structure 1 according to the embodiment includes a composite material 10, a conductive primer 12, and a conductive sealant 14. The composite material structure 1 may be used in the body of an aircraft, a vehicle, or a vessel, for example, but may also be used in other structures.

The composite material 10 includes carbon fibers and resin. The composite material 10 is a carbon-fiber-reinforced plastic such as a CFRP. An example of the resin included in the composite material 10 is epoxy resin. The resin included in the composite material 10 is not limited to epoxy resin, and may also be a polyester resin or a thermosetting resin such as vinyl ester resin. The resin included in the composite material 10 is not limited to a thermosetting resin, and may also be a thermoplastic resin such as polyether ether ketone resin (PEEK) resin, polyetherimide (PEI) resin, or polyphenylene sulfide (PPS). The composite material 10 is applied with blasting such as sanding so as to expose the carbon fibers, in the area where the conductive primer 12 is to be applied.

The conductive primer 12 is a conductive primer applied on a surface of the composite material 10. The conductive primer 12 is applied in the area where the carbon fibers are exposed by sanding, on the surface of the composite material, for example. The conductive primer 12 is applied on a part where the carbon fibers in the prepreg layers of the composite material 10 are exposed, e.g., on an edge or a cutout surface. The reason why the conductive layer is applied on the edge is that edge glow occurs due to a dielectric breakdown caused by an increased potential difference between the prepreg layers of the composite material 10, between the prepreg layers being where conductivity is insufficient. As a solution to this problem, the potential difference is eliminated by applying the conductive primer 12 to enhance the conductivity between the prepreg layers. The conductive primer 12 is applied to a range at least including an edge 10a of the composite material 10, for example. In the example illustrated in FIG. 1, the conductive primer 12 extends from the top surface to the bottom surface of the composite material 10 to include the edge 10a. The conductive primer 12 is made of epoxy resin, for example, but is not limited thereto. By using resins of the same family for the conductive primer 12 and the composite material 10, the conductive primer 12 is allowed to adhere to the composite material 10 suitably. In this embodiment, any combination of the resins in the same family may be selected for the resin of the conductive primer 12 and the resin of the composite material 10. The conductive primer 12 includes a conductive material. In this embodiment, the conductive material included in the conductive primer 12 is a carbon nano fiber (CNF).

In this embodiment, the carbon nanofiber is a carbon fiber having a diameter equal to or larger than 30 nm and equal to or smaller than1000 nm, for example. The carbon nanofiber has a length equal to or larger than 0.2 um and equal to or smaller than 70 µm, for example. Specifically, the carbon nanofiber preferably forms a carbon nanofiber group in which 50 count % or more of carbon nanofibers have lengths within a range equal to or more than 0.2 um and equal to or smaller than 70 µm, among the carbon nanofibers included in the conductive primer 12, for example.

The film thickness of the conductive primer 12 is about equal to or greater than 20 um and 100 µm, for example, but is not limited thereto. The electrical conductivity of the conductive primer 12 is 10³ siemens/meter or so, but is not limited thereto. The electrical conductivity of the conductive primer 12 is, preferably, equal to or lower than the electrical conductivity of the carbon fibers included in the composite material 10, for example.

The conductive primer 12 including carbon nanofibers is more dispersible than a conductive primer including conventional carbon nanotubes. Therefore, by using the conductive primer 12 including carbon nanofibers, the workability in the application of the conductive primer 12 onto the surface of the composite material 10 is improved. Furthermore, because the carbon fibers included in the composite material 10 and the carbon nanofibers included in the conductive primer 12 are both carbons, a small potential difference is formed between the carbon fibers and the carbon nanofibers. Therefore, it is possible to suppress electrical erosion between the composite material 10 and the conductive primer 12.

The conductive sealant 14 is a conductive sealant applied on the surface of the conductive primer 12. In other words, in this embodiment, the composite material structure 1 has two layers of conductive materials. The conductive sealant 14 includes a conductive material. The conductive sealant 14 can be achieved by including a conductive material in a known sealant, for example. As the sealant, any sealant that is highly adhesive to the conductive primer 12 may be selected, for example. In this manner, the conductive sealant 14 is allowed to adhere to the conductive primer 12 suitably. In this embodiment, the conductive material included in the conductive sealant 14 is carbon nanotubes or carbon nanofibers, but is not limited thereto.

The film thickness of the conductive sealant 14 is, when the film thickness of the conductive primer 12 is equal to or greater than 20 um and 100 um or so, 1 mm or so, for example. In other words, the conductive sealant 14 is thicker than the conductive primer 12. The conductive sealant 14 is less electrically conductive than the conductive primer 12. Therefore, by setting the thickness of the conductive sealant 14 greater than that of the conductive primer 12, the electrical conductivity of the conductive sealant 14 is set to an appropriate level. Specifically, the electrical conductivity of the conductive sealant 14 is set to equal to or lower than 10³ siemens/meter when the electrical conductivity of the conductive primer 12 is 10³ siemens/meter. In other words, the electrical conductivity of the conductive sealant 14 is set to a value equal to or lower than the electrical conductivity of the conductive primer 12.

Generally, because the conductive sealant 14 is not very adhesive to the composite material 10, if the conductive sealant 14 is applied directly to the surface of the composite material 10, the conductive sealant 14 can peel off from the composite material 10. To address this issue, in this embodiment, by applying the conductive primer 12 as a primer, peeling of the conductive sealant 14 off from the composite material 10 is suppressed. In this manner, an appropriate electrical connection can be maintained between the composite material 10 and the conductive sealant 14. With this, in this embodiment, because the electrical conductivity of the conductive sealant 14 is set to a value equal to or lower than the electrical conductivity of the conductive primer 12, emergence of skin effect can be suppressed, and the current can be kept within the conductive primer 12 on the inner side of the conductive sealant 14. Therefore, sparks are less likely to be generated on the surface of the conductive sealant 14. Hence, it is possible to prevent generation of edge glow. In other words, in this embodiment, the carbon fibers included in the composite material 10, the conductive primer 12, and the conductive sealant 14 have lower electrical conductivities in the order listed herein.

Note that it is also possible to apply a coating material for protecting the composite material structure 1 from the external environment, on the surface of the conductive sealant 14.

The composite material structure 1 has a two-layer structure including the conductive primer 12 and the conductive sealant 14. With this structure, because the thickness of the coating is increased, reliability is improved. Furthermore, even if overcurrent flows into the conductive primer 12, and the conductive primer 12 peels off or becomes destroyed, the conductive sealant 14 prevents scattering of the conductive primer 12.

### [Modification of Embodiment]

One example of a composite material structure according to a modification of the embodiment will now be explained with reference to FIG. 2. FIG. 2 is a diagram schematically illustrating an exemplary cross section of the composite material structure according to the modification of the embodiment.

As illustrated in FIG. 2, this composite material structure 1A according to the embodiment includes the composite material 10, the conductive primer 12, and the conductive sealant 14.

As illustrated in FIG. 2, the composite material structure 1A is different from the composite material structure 1 illustrated in FIG. 1 in that the conductive sealant 14 is provided only on the edge 10a of the composite material 10. By applying the conductive sealant 14 only on the edge 10a where edge glow is likely to occur, as in the composite material structure 1A, too, it is possible to prevent generation of edge glow. In other words, in the present disclosure, by applying the conductive sealant 14 at least on the edge 10a, it is possible to prevent generation of edge glow.

In the example illustrated in FIGS. 1 and 2, the edge 10a of the composite material 10 extends in parallel with the Z-axis direction, but the present disclosure is not limited thereto. The edge 10a may be slanted with respect to the Z-axis direction. Even in a configuration in which the edge 10a is slanted with respect to the Z-axis direction, by applying the conductive primer 12 on the surface of the edge 10a, and providing the conductive sealant 14 of the surface of the conductive primer 12, it is possible to prevent generation of edge glow.

### [Composite Material Structure Manufacturing Method]

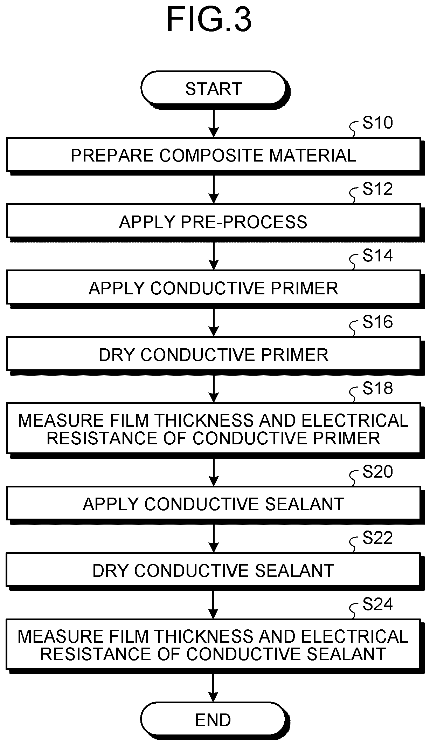

A composite material structure manufacturing method according to the embodiment will now be explained with reference to FIG. 3. FIG. 3 is a flowchart illustrating one example of the sequence of the composite material structure manufacturing method according to the embodiment.

To begin with, the composite material 10 used in the composite material structure 1 is prepared (Step S10). The process is then shifted to Step S12.

The composite material 10 is then applied with a pre-process (Step S12). Specifically, the resin is removed from the area at least including the edge 10a of the composite material 10, where the conductive primer 12 is to be applied, by applying sanding, so that the carbon fibers included in the composite material 10 become exposed. The process is then shifted to Step S14.

The conductive primer 12 is then applied on the sanded area of the composite material 10 (Step S14). Specifically, the conductive primer 12 is applied to the sanded area using a spray or an airless spray. In this embodiment, highly dispersible carbon nanofibers are used as the conductive material included in the conductive primer 12. Therefore, with the conductive primer 12 according to the embodiment, because precipitation of the conductive material is less, the coat can be prepared easily; the nozzle of a spray is less likely to clog, when a spray is used in applying the coating; and excellent sagging property can be achieved. Furthermore, because the conductive primer 12 is a highly dispersible primer, application unevenness of the conductive primer 12 can be reduced, so that stable electrical conductivity can be achieved. Furthermore, by applying the conductive primer 12 to the composite material 10 using an airless spray at Step S14, a thicker layer of the conductive primer 12 can be achieved. By applying the conductive primer 12 as a thick layer, reliability can be improved. The process is then shifted to Step S16.

The conductive primer 12 applied to the composite material 10 is then dried (Step S16). At Step S16, any known method may be used to dry the conductive primer 12. The process is then shifted to Step S18.

The film thickness and the electrical resistance of the conductive primer 12 are then measured (Step S18). Specifically, the film thickness and the electrical resistance of the conductive primer 12 are measured to determine whether the film thickness and the electrical resistance of the conductive primer 12 satisfy predetermined reference values. Preferably, the film thickness is measured at a plurality of points of the conductive primer 12, for example. As to the electrical resistance, preferably, the electrical resistance between two points of the conductive primer 12 is measured at a plurality of points, for example. The process is then shifted to Step S20.

The conductive sealant 14 is then applied on the surface of the conductive primer 12 (Step S20). Specifically, the conductive sealant 14 is applied on the surface of the conductive primer 12 by discharging the conductive sealant 14 onto the surface of the conductive primer 12 using a sealant gun, for example. In other words, in this embodiment, two layers of coating materials including the conductive primer 12 and the conductive sealant 14 is applied to the composite material 10. The process is then shifted to Step S22.

The conductive sealant 14 applied on the surface of the conductive primer 12 is then dried (Step S22). At Step S22, any known method may be used to dry the conductive sealant 14. The process is then shifted to Step S24.

The film thickness and the electrical resistance of the conductive sealant 14 are then measured (Step S24). Specifically, the film thickness and the electrical resistance of the conductive sealant 14 are measured to determine whether the film thickness and the electrical resistance of the conductive sealant 14 satisfy predetermined reference values. Preferably, the film thickness is measured at a plurality of points of the conductive primer 12, for example. As to the electrical resistance, preferably, the electrical resistance between two points of the conductive primer 12 is measured at a plurality of points, for example. The process illustrated in FIG. 3 is then ended.

The composite material structure or the composite material structure manufacturing method described in the embodiment is understood as following, for example.

A composite material structure according to a first aspect includes a composite material 10 including a carbon fiber and a resin; a conductive primer 12 including a carbon nanofiber and provided at least on a surface of the edge 10a of the composite material 10; and a conductive sealant 14 including a conductive material and provided on the surface of the conductive primer 12.

The composite material structure according to the first aspect has a two-layer structure including the conductive primer 12 including a carbon nanofiber and provided on the surface of the composite material 10, and the conductive sealant provided on the surface of the conductive primer 12. With this, in the composite material structure according to the first aspect, it is possible to suppress generation of edge glow, and to suppress electrical erosion between the composite material 10 and the conductive primer 12. Furthermore, because the composite material structure according to the first aspect has the two-layer structure including the conductive primer 12 and the conductive sealant 14 as coating materials, reliability can be improved.

In a composite material structure according to a second aspect, the carbon fiber included in the composite material 10 is exposed on a surface that is in contact with the conductive primer 12.

In the composite material structure according to the second aspect, the carbon fiber in the composite material 10 and the conductive primer 12 can be electrically connected appropriately. With this, in the composite material structure according to the second aspect, it is possible to suppress generation of edge glow more appropriately.

In a composite material structure according to a third aspect, the conductive primer 12 includes a resin of a same family as the resin of the composite material 10.

With this, in the composite material structure according to the third aspect, the conductive primer 12 is allowed to adhere suitably to the composite material 10.

In a composite material structure according to a fourth aspect, the carbon nanofiber has a diameter equal to or larger than 30 nm and equal to or smaller than 1000 nm.

With this, in the composite material structure according to the fourth aspect, it is possible to achieve a conductive primer 12 that is highly dispersible, and that is capable of suppressing electrical erosion between the composite material 10 and the conductive primer 12.

In a composite material structure according to a fifth aspect, the carbon nanofiber forms a carbon nanofiber group in which 50 count % of carbon nanofibers have lengths within a range equal to or more than 0.2 um and equal to or smaller than 70 µm, among carbon nanofibers included in the conductive primer 12.

With this, in the composite material structure according to the fifth aspect, it is possible to achieve a conductive primer 12 that is highly dispersible, and that is capable of suppressing electric erosion between the composite material 10 and the conductive primer 12.

In a composite material structure according to a sixth aspect, the conductive primer 12 and the conductive sealant 14 have electrical conductivities lower than an electrical conductivity of the carbon fiber.

With this, in the composite material structure according to the sixth aspect, it is possible to prevent a concentration of current flows into the conductive primer 12 and the conductive sealant 14, and therefore, reliability can be improved.

In a composite material structure according to a seventh aspect, the conductive sealant 14 has an electrical conductivity equal to or lower than the electrical conductivity of the conductive primer 12.

With this, in the composite material structure according to the seventh aspect, emergence of skin effect can be suppressed, so that reliability can be improved.

In a composite material structure according to an eighth aspect, the conductive sealant 14 has a thickness greater than a thickness of the conductive primer 12.

With this, in the composite material structure according to the eighth aspect, the electrical conductivity of the conductive sealant 14 can be set appropriately, so that it is possible to suppress generation of edge glow more appropriately.

A composite material structure manufacturing method according to a ninth aspect includes a step of blasting at least a surface of the edge 10a of the composite material 10 including a carbon fiber and a resin; a step of applying the conductive primer 12 including a carbon nanofiber to a blasted area of the composite material 10; and a step of applying a conductive sealant including a conductive material on a surface of the conductive primer.

With this, the composite material structure manufacturing method according to the ninth aspect, it is possible to manufacture a composite structure having a two-layer structure including the conductive primer 12 including a carbon nanofiber and provided on the surface of the composite material 10, and the conductive sealant provided on the surface of the conductive primer 12. With this, in the composite material structure manufacturing method according to the ninth aspect, it is possible to achieve a composite material structure capable of suppressing generation of edge glow, and to suppress electrical erosion between the composite material 10 and the conductive primer 12. Furthermore, the composite material structure manufacturing method according to the ninth aspect can achieve a composite material structure with improved reliability, because the composite material structure has a two-layer structure including the conductive primer 12 and the conductive sealant 14 as coating materials.

An embodiment of the present disclosure has been described above, but this specific embodiment is not intended to limit the scope of the present disclosure. Furthermore, the elements described above include those that can be easily thought of by a person skilled in the art, those that are substantially identical, and those within the scope of what is called equivalence. Furthermore, the elements described above may be combined as appropriate. Furthermore, various omissions, replacements, or changes of the elements described above are possible within the scope not deviating from the essence of such elements.

### Reference Signs List

- 1, 1A: Composite material structure
- 10: Composite material
- 12: Conductive primer
- 14: Conductive sealant

## Claims

1. A composite material structure comprising:
a composite material including a carbon fiber and a resin;
a conductive primer including a carbon nanofiber and applied at least on a surface of an edge of the composite material; and
a conductive sealant including a conductive material and applied on the surface of the conductive primer.

2. The composite material structure according to claim 1, wherein the carbon fiber included in the composite material is exposed on a surface that is in contact with the conductive primer.

3. The composite material structure according to claim 1 or 2, wherein the conductive primer includes a resin of a same family as the resin of the composite material.

4. The composite material structure according to any one of claims 1 to 3, wherein the carbon nanofiber has a diameter equal to or larger than 30 nm and equal to or smaller than 1000 nm.

5. The composite material structure according to any one of claims 1 to 4, wherein the carbon nanofiber forms a carbon nanofiber group in which 50 count % of carbon nanofibers have lengths within a range equal to or more than 0.2 µm and equal to or smaller than 70 um, among carbon nanofibers included in the conductive primer.

6. The composite material structure according to any one of claims 1 to 5, wherein the conductive primer and the conductive sealant have electrical conductivities lower than an electrical conductivity of the carbon fiber.

7. The composite material structure according to any one of claims 1 to 6, wherein the conductive sealant has an electrical conductivity equal to or lower than the electrical conductivity of the conductive primer.

8. The composite material structure according to any one of claims 1 to 7, wherein the conductive sealant has a thickness greater than a thickness of the conductive primer.

9. A composite material structure manufacturing method comprising the steps of:
blasting at least a surface of an edge of a composite material including a carbon fiber and a resin;
applying a conductive primer including a carbon nanofiber to a blasted area of the composite material; and
applying a conductive sealant including a conductive material on a surface of the conductive primer.
